# EUROPÄISCHE PATENTSCHRIFT

(11) **EP 4 412 945 B1**
(45) Veröffentlichungstag und Bekanntmachung des Hinweises auf die Patenterteilung: **08.04.2026**
(21) Anmeldenummer: 23713294.9
(22) Anmeldetag: 23.02.2023
(51) Int. Cl.: B67D 1/04, B67D 1/08, B67D 1/12, G05D 16/00, B67D 1/14, G05D 16/06

(54) **ZAPF- UND REGELEINRICHTUNG SOWIE BEHÄLTNIS MIT EINER SOLCHEN ZAPF- UND REGELEINRICHTUNG**
TAPPING AND REGULATING DEVICE, AND CONTAINER HAVING SUCH A TAPPING AND REGULATING DEVICE
DISPOSITIF DE PRÉLÈVEMENT ET DE RÉGULATION AINSI QUE RÉCIPIENT DOTÉ D'UN TEL DISPOSITIF DE PRÉLÈVEMENT ET DE RÉGULATION

(30) Priorität: 23.02.2022 DE 202022002781 U
(43) Veröffentlichungstag der Anmeldung: 14.08.2024
(73) Patentinhaber: OAM GmbH, 69259 Wilhelmsfeld (DE)
(72) Erfinder: OBERHOFER, Timm, 69259 Wilhelmsfeld (DE)
(74) Vertreter: Ullrich & Naumann PartG mbB
(86) Internationale Anmeldenummer: PCT/DE2023/200039
(87) Internationale Veröffentlichungsnummer: WO 2023/160761

(56) Entgegenhaltungen:
- EP-A1- 1 428 791
- EP-A1- 2 009 535
- DE-T5- 112006 003 934
- US-A- 5 110 012

## Beschreibung

Die Erfindung betrifft eine Zapf- und Regeleinrichtung zum Ausbringen einer Flüssigkeit aus einem Behältnis, insbesondere aus einem Getränkebehältnis, vorzugsweise zum Ausbringen eines Bieres oder eines Biergetränks aus einem Bierfass, vorzugsweise aus einem 5L-Party-Bierfass. Des Weiteren betrifft die Erfindung ein Behältnis, beispielsweise ein 5L-Party-Bierfass, mit einer solchen Zapf- und Regeleinrichtung.

Gattungsbildende Zapf- und Regeleinrichtungen sowie Getränkebehälter der hier in Rede stehenden Art sind hinlänglich aus der Praxis bekannt. Dies gilt insbesondere für sog. 5L-Party-Bierfässer.

Party-Bierfässer sind in unterschiedlichsten Ausgestaltungen bekannt. Die Bierfässer sind regelmäßig aus Weißblech hergestellt und haben im unteren Bereich, nahe dem Boden, einen Zapfhahn. Im oberen Bereich, vorzugsweise im Deckel, ist ein Be- und Entlüftungsventil vorgesehen. Dieses wird beim Zapfen geöffnet, so dass das Bier aufgrund der Schwerkraft aus dem im unteren Bereich angeordneten Zapfhahn auslaufen kann. Hier ist nachteilig, dass bei geringer Restmenge an Bier dieses nur zögerlich aus dem Zapfhahn läuft. Außerdem verdirbt eine im Party-Bierfass verbliebene Restmenge an Bier äußerst schnell. Entsprechend muss das Bier schnellstmöglich verzehrt werden.

Aus EP 2 009 535 ist ein Party-Bierfass bekannt, bei dem der Zapfhahn im oberen Bereich des Getränkebehälters, genauer gesagt im oberen Bereich der Seitenwand des Getränkebehälters, angeordnet ist. Zur Aufrechterhaltung eines zum Zapfen erforderlichen Mindest-Drucks ist im Inneren des Behälters eine Druckquelle in Form einer Kohlendioxid-Patrone angeordnet. Wird Bier gezapft, wird über die Druckquelle der im Inneren des Fasses herrschende Druck automatisch nachreguliert, so dass dieser bis ganz zum Schluss des Zapfens ausreicht, um das Bier über das Steigrohr nach oben zum Zapfhahn zu fördern.

Aus DE 10 2019 207 114 A1 ist ebenfalls ein 5L-Party-Bierfass bekannt, wobei auch dieses Bierfass innerhalb des Behälters eine Druckdose mit Kohlendioxid umfasst. Auch hier ist die Zapfeinheit im oberen Bereich der Wandung des Bierfasses angeordnet und muss zum Zapfen orthogonal zur Längsachse des Bierfasses herausgezogen werden.

Zur Aktivierung des Drucksystems ist im Bodenbereich eine Aktivierungseinrichtung eingebaut, wonach das Drucksystem von außerhalb des Bierfasses aktivierbar ist. Ein entsprechendes Regelventil ist vorgesehen.

DE 11 2006 003934 T5 zeigt für sich gesehen einen Einweg-Getränkespender mit integrierter Gaspatrone. Die Gaspatrone wird von einem Gaspatronen-Lochdorn durchstochen, um für einen Druckregler unter Druck stehendes Gas bereitzustellen. Der Druckregler hat einen Druckreglerausgang, der so konfiguriert ist, dass er mit dem inneren eines Getränkebehälters verbunden ist.

US 5,110,012 A zeigt eine Zapf- und Regeleinrichtung zum Ausbringen einer Flüssigkeit aus einem Behältnis, wobei die dort bekannte Vorrichtung in Ermangelung einer stab- oder zylinderförmigen Anordnung der Funktionselemente relativ groß baut.

Die bekannten 5L-Party-Bierfässer sind in der Praxis problematisch, da auch bei eingeschobenem Zapfhahn, d.h. im nicht-aktivierten Zustand, der Zapfhahn mit einem Betätigungsorgan ungeschützt zumindest geringfügig nach außen ragt, so dass insbesondere beim Transport und bei der Handhabung die Gefahr besteht, dass der äußere Bereich des Zapfhahns, insbesondere das auch in der Transport- und Lagerposition außerhalb des Behältnisses befindliche Betätigungsorgan, beschädigt wird. In einem solchen Falle wird die Zapfeinheit unbrauchbar. Außerdem ist die Vorkehrung separater Einheiten - Druckeinheit mit Regeleinheit und Zapfeinheit - aufwändig in der Konstruktion und beim Einsetzen in das Behältnis. Die Handhabung ist sowohl für den Abfüller des Bieres als auch für den Kunden/Endverbraucher kompliziert.

Der Erfindung liegt daher die Aufgabe zugrunde, eine Zapf- und Regeleinrichtung zum Ausbringen einer Flüssigkeit aus einem Behältnis, insbesondere aus einem Getränkebehältnis, vorzugsweise zum Ausbringen eines Bieres oder eines Biergetränks aus einem Bierfass, vorzugsweise aus einem 5L-Party-Bierfass, derart auszugestalten und weiterzubilden, dass die Handhabung sowohl für den Abfüller des Getränks als auch für den Endkunden einfach ist. Die Gefahr von Leckagen im bzw. am Behältnis soll weitestgehend vermieden werden.

Voranstehende Aufgabe ist in Bezug auf die erfindungsgemäße Zapf- und Regeleinrichtung durch die Merkmale des Patentanspruchs 1 gelöst. Danach umfasst die Zapf- und Regeleinrichtung eine stab- oder zylinderförmige Anordnung aus Druckeinheit, Regeleinheit und Zapfeinheit. In Abkehr zum Stand der Technik sind die drei Einheiten in einer stab- oder zylinderförmigen Anordnung in einem ein- oder mehrteiligen Gehäuse miteinander kombiniert. So ist es möglich, die gesamte Anordnung durch eine einzige Öffnung im Deckel des Behältnisses nahezu bündig in das Behältnis einzustecken, die es abzudichten gilt. Im Gegensatz zum Stand der Technik benötigt das Behältnis nur eine einzige Öffnung, nämlich zum Einbringen der gesamten Anordnung. Der zum Abdichten notwendige Aufwand ist gegenüber dem Stand der Technik reduziert.

Die Zapfeinheit ist von einer in die Anordnung eingesteckten Transport- und Lagerposition in eine aus der Anordnung entnommene und mit dieser strömungsverbundene Gebrauchsposition verbringbar. Dies bedeutet, dass sich die Zapfeinheit zunächst komplett innerhalb der Anordnung befindet, die als Transport- und Lagerposition definiert ist. Ein kleiner Bereich, der zur Handhabung der Zapfeinheit bzw. zum Verbringen der Zapfeinheit in die Gebrauchsposition dient, ist derart flach ausgebildet, dass er ähnlich einem flachen Schraubenkopf am Deckel um die Öffnung herum weitestgehend zur Anlage kommt. Geht man davon aus, dass dieser Bereich wesentlich tiefer liegt als der umlaufende Rand bzw. Falz des Bierfasses, ist der in der Transport- und Lagerposition außerhalb des Behältnisses angeordnete Teil der Zapf- und Regeleinrichtung umlaufend geschützt, so dass eine unbeabsichtigte Beschädigung nahezu ausgeschlossen ist.

Wird die Zapfeinheit aus ihrer Transport- und Lagerposition beispielsweise durch Drehen eines äußeren Teils entnommen, kann sie in eine Gebrauchsposition verbracht werden, nämlich durch Herausziehen der Zapfeinheit aus der stab- oder zylinderförmigen Anordnung, die sich innerhalb des Behältnisses befindet. Es ist selbstredend, dass diese Anordnung druckdicht ist, so dass durch Entnahme der Zapfeinheit keine Leckage entsteht. Die Strömungsverbindung der Zapfeinheit mit der Regeleinheit ermöglicht eine druckgeförderte Entnahme der Flüssigkeit bzw. des Bieres dort, wo die Zapfeinheit positioniert wird. Diese Position ist als Gebrauchsposition zu verstehen.

Zum einfachen und bequemen Zapfen wird die aus der stab- oder zylinderförmigen Anordnung entnommene Zapfeinheit an dem Behältnis befestigt, vorzugsweise an dessen Rand oder Falz. Die Anbringung kann durch Aufstecken oder Anklipsen erfolgen, dergestalt, dass der eigentliche Zapfhahn über die seitliche Wandung des Behältnisses hinausragt, so dass wie bei einem herkömmlichen Bierfass von der Seite her gezapft werden kann. Dabei ist sicherzustellen, dass die Strömungsverbindung aus der stab- oder zylinderförmigen Anordnung heraus zur Zapfeinheit gewährleistet ist. Voranstehende Ausführungen machen deutlich, dass die erfindungsgemäße Zapf- und Regeleinrichtung sowohl für den Abfüller als auch für den Endkunden eine einfache Handhabung bis hin zum Zapfen des Bieres ermöglicht, wobei die Anordnung der Zapfeinheit ganz oben im Randbereich des Behältnisses ein Zapfen auch in größere Gläser/Behältnisse hinein ermöglicht.

Zwischen der Regeleinheit und der Zapfeinheit, in einem der Regeleinheit zugewandten Bereich des Dichtgehäuses, ist eine Überdrucksicherung vorgesehen, die eine Federkraft beaufschlagte Berstscheibe nebst Siegelscheibe oder Siegelring umfassen kann. Der Siegelring stellt einen Indikator für ein einmaliges Auslösen der Überdrucksicherung dar.

Die Überdrucksicherung ist als kompakte Baugruppe zu verstehen. Sie umfasst entsprechend den voranstehenden Ausführungen eine Siegelscheibe, unter bzw. hinter der ein Dichtring angeordnet ist. Unter bzw. hinter dem Dichtring ist die Berstscheibe angeordnet, die sich auf der einen Seite in Richtung Siegelscheibe und Dichtring erstreckt. Auf der anderen Seite erstreckt sich die Berstscheibe in Richtung einer Feder, wodurch die Berstscheibe durch die Feder federkraftbeaufschlagt ist. Die gesamte Baugruppe umfassend die Siegelscheibe, die Dichtung, die Berstscheibe und die Feder, ist in ein eigens dafür vorgesehenes Gehäuse eingesetzt.

Die Funktion der Überdrucksicherung ergibt sich wie folgt:
Steigt im Behältnis der Innendruck, nimmt gleichzeitig der Druck an einer Einströmöffnung der Siegelscheibe zu. Überschreitet der dort herrschende Druck einen vorgegebenen Schwellwert, ist die Feder nicht mehr in der Lage, die Siegelscheibe gegen die Dichtung zu pressen. Die spezifische Federkraft definiert somit den Gegendruck. Sobald dies geschieht, hebt die Berstscheibe von der Dichtung ab.

Mittig in der Berstscheibe ist ein Zentrier- und Positionierstern ausgebildet. Um diesen Zentrier- und Positionierstern herum sind Einströmkanäle vorgesehen, durch die das Fluidum (bspw. das Biergetränk) in das Innere der Überdrucksicherung strömt.

Hebt die Berstscheibe nur leicht von der Dichtung ab, nämlich dann, wenn der Druck im Behälter langsam ansteigt, gelangt die Berstscheibe nicht an ihrer Weg-Begrenzung zur Anlage. In diesem Falle strömt das Fluidum um die Berstscheibe herum und gelangt durch die Feder hindurch in einen Atmosphärenauslass und entweicht über das Gehäuse der Überdrucksicherung.

Steigt der Druck im Behälter schnell an, gelangt die Berstscheibe zur Anlage an ihrer Wegbegrenzung. Für diesen Fall sind im Gehäuse der Überdrucksicherung Schnellentlüftungsnuten ausgebildet, durch die das Fluidum trotz Anlage der Berstscheibe an ihrer Weg-Begrenzung mehr oder weniger ungehindert durch die Feder und danach durch den Atmosphärenauslass in die Umgebung entweichen kann.

Wie bereits zuvor ausgeführt, lässt sich durch die spezifische Federkraft ein Auslösedruck der Überdrucksicherung vorgeben bzw. einstellen.

Die Berstscheibe der Überdrucksicherung ist vorzugsweise symmetrisch aufgebaut. Dadurch kann sie auf der einen Seite die Feder aufnehmen bzw. ein Widerlager für die Feder bilden. Auf der anderen Seite ist die Berstscheibe in der Siegelscheibe zentriert oder umgekehrt.

Eine Montage der die Überdrucksicherung betreffenden Baugruppe ist begünstigt, da die Berstscheibe nicht gesondert in ihrer Lagerichtung zugeführt werden muss. Durch das Ineinandergreifen der Bauteile ist die Montage ganz erheblich vereinfacht.

Des Weiteren ist wesentlich, dass dann, wenn im Behälter der Druck wieder abfällt, die Feder erneut in der Lage ist, die Berstscheibe gegen die Dichtung zu drücken. Folglich ist die Überdrucksicherung für die Dauer des Gebrauchs der Vorrichtung, bspw. eines Bierfasses, aktiv und verschließt den Behälter nach Abbau des Drucks abermals. Somit stellt sich der Auslieferungszustand automatisch wieder ein. Eine sichere Handhabung ist gewährleistet.

In vorteilhafter Weise umfasst die Druckeinheit als unteres Gehäuseteil ein endseitiges Patronengehäuse mit einer darin angeordneten Gaspatrone. Dabei handelt es sich vorzugsweise um eine CO₂-Patrone. An das Patronengehäuse schließt sich als zweites Gehäuseteil ein Dichtgehäuse an, welches gegenüber dem Patronengehäuse abdichtet oder mit dem Patronengehäuse einteilig ausgeführt ist. Das Dichtgehäuse ist wie das Patronengehäuse zumindest bereichsweise nach außen abgedichtet.

Das Dichtgehäuse umfasst einen nach außerhalb nicht abgedichteten Stauraum, in den die Zapfeinheit, vorzugsweise kopfüber, in ihrer Transport- und Lagerposition weitestgehend eingesteckt ist. Im eingesteckten Zustand schließt die Zapfeinheit das Dichtgehäuse am freien Ende ab, wobei es sich hier nicht um einen flüssigkeitsdichten Abschluss handelt. Durch Drehen der Zapfeinheit wird im Inneren ein Drehkolben gedreht, bis ein Eintrittsloch im Dichtgehäuse mit einem Eintrittsloch im Drehkolben in Überdeckung ist. Dadurch aktiviert der Benutzer die Zapfeinrichtung.

Wird die Zapfeinheit aus ihrer Transport- und Lagerposition herausgezogen, verbleibt der "leere" Stauraum, der zum Inneren hin, d.h. gegenüber der Regeleinheit und Druckeinheit, abgedichtet ist, so dass von dort aus die im Inneren des Behältnisses unter Druck stehende Flüssigkeit nicht nach außerhalb gelangen kann. Die gesamte stab- oder zylinderförmige Anordnung ist im eingesteckten Zustand gegenüber dem Rand der Öffnung, in die sie in das Behältnis eingesteckt ist, abgedichtet, und zwar druckdicht, entsprechend dem im Behältnis herrschenden Innendruck.

Zwischen den beiden Gehäuseteilen - Patronengehäuse und Dichtgehäuse - kann ein mittleres Gehäuseteil oder ein Übergangsbereich in den beiden Gehäuseteilen vorgesehen sein, in dem die Regeleinheit ausgebildet ist. Die Regeleinheit ist gegenüber dem Stauraum für die Zapfeinheit, d.h. gegenüber der Umgebung des Behältnisses, flüssigkeitsdicht.

Die Regeleinheit kann in einer Druckhülse angeordnet sein, die als Zwischenstück zwischen dem Patronengehäuse und dem Dichtgehäuse ausgeführt sein kann.

Außerhalb des Patronengehäuses und ggf. des mittleren Gehäuseteils oder des Übergangsbereichs ist ein Steigrohr zum druckbedingten Aufsteigen der Flüssigkeit ausgebildet. Das Steigrohr kann ebenso integraler Bestandteil der Gehäuseteile sein. Im Bereich des Dichtgehäuses mündet das Steigrohr in dieses hinein, und zwar im Inneren des Dichtgehäuses in einen internen Fließkanal, der über eine elastische Strömungsverbindung mit dem Zapfkanal der Zapfeinheit strömungsverbunden ist. Druck herrscht somit ausschließlich in der Strömungsverbindung und nicht im Stauraum der Zapfeinheit. Dieser ist gegenüber dem Inneren des Behältnisses abgedichtet.

Bei der elastischen Strömungsverbindung handelt es sich in vorteilhafter Weise um einen elastischen Schlauch, der gerade so lang ausgeführt ist, dass er einerseits in den Stauraum passt und andererseits bis hin zur Gebrauchsposition der Zapfeinheit führt, nämlich im herausgezogenen Zustand der Zapfeinheit.

Die Druckeinheit umfasst eine Druckhülse mit einer Einschraubhülse und einem Ventilstössel, der über die damit wirkverbundene Regeleinheit betätigbar ist. Die Druckpatrone ist in die Einschraubhülse eingeschraubt und lässt sich über den Ventilstössel betätigen, wobei eine erste Betätigung mit Entnahme der Zapfeinheit erfolgt. Erst danach ist die Druckpatrone aktiviert und kann das zum Ausbringen der Flüssigkeit erforderliche Gas in den Innenraum des Behältnisses strömen. Wird ein vorgegebener Innendruck erreicht, schließt die Regeleinheit die Druckeinheit automatisch in herkömmlicher Weise. Dazu sei auf den eingangs zitierten Stand der Technik verwiesen.

Die Regeleinheit umfasst eine auf den Ventilstössel wirkende Membran, die dem Druck einer zwischen der Druckhülse und der Membran ausgebildeten Drucckammer ausgesetzt ist. Gegen den Druck eines federkraftbeaufschlagten Druckspanners öffnet oder schließt die Druckpatrone über den Ventilstössel in herkömmlicher Weise.

Zwischen der Regeleinheit und der Zapfeinheit, vorzugsweise in einem der Regeleinheit zugewandten Bereich des Dichtgehäuses, ist eine Überdrucksicherung vorgesehen, die eine Federkraft beaufschlagte Berstscheibe nebst Siegelring umfassen kann. Der Siegelring stellt einen Indikator für ein einmaliges Auslösen dar.

Die Zapfeinheit umfasst einen Zapfkopf mit einem sich an den elastischen Schlauch anschließenden Zapfkanal und einen zur Betätigung dienenden Zapfhebel. An dieser Stelle sei angemerkt, dass die Strömungsverbindung des elastischen Schlauchs beidseitig durch Aufstecken des Schlauchs mittels Klemmwirkung realisierbar ist.

Des Weiteren ist es von Vorteil, wenn die Zapfeinheit eine Art Ventilwalze umfasst, die auf Betätigen des Zapfhebels den Zapfkanal sukzessive öffnet oder schließt.

So lässt sich der Strömungskanal vom komplett geschlossenen Zustand bis hin zum komplett geöffneten Zustand und umgekehrt öffnen oder schließen. Eine Dosierung bzw. Drosselung der auszubringenden Flüssigkeitsmenge ist möglich.

Die Zapfeinheit hat an ihrem stirnseitigen Ende ein Handhabungsorgan, welches zum Herausziehen der Zapfeinheit aus dem druckfreien Stauraum innerhalb der stab- oder zylinderförmigen Anordnung dient. Dadurch gelangt die Zapfeinheit aus der gesicherten Transportposition in die Betätigungsposition, wobei die Zapfeinheit dorthin händisch verbracht wird.

Des Weiteren ist es von Vorteil, wenn die Anordnung ein Originalitätssiegel umfasst. In der Transportposition verbindet das Originalitätssiegel den Zapfkopf mit dem Dichtgehäuse in lösbarer Weise. Gleichzeitig kann das Originalitätssiegel das freie Ende des Zapfkanals, d.h. den Auslauf, verschließen. Beim Herausziehen der Zapfeinheit mittels Handhabungsorgan löst sich das Originalitätssiegel von dem Dichtgehäuse irreversibel. Dabei kann es beispielsweise brechen. Es gibt danach den Zapfkanal zum Auslauf frei. An dieser Stelle sei vermerkt, dass durch Entnahme der Zapfeinheit die Regeleinheit auf die Druckeinheit wirkt und aufgrund eines Ausströmens des Gases bei Betätigung des Zapfhebels ein Zapfen möglich ist.

Zur Positionierung des Zapfkopfes weist dieser eine Klemmeinrichtung auf, im einfachsten Falle ein zum Aufstecken auf den Falz geeigneter Spalt, der zum klemmenden Aufstecken des Zapfkopfes auf den Rand oder Falz des Behältnisses dient. Zum sicheren Anbringen kann die Klemmeinrichtung mit einem Hinterschnitt ausgestattet sein, so dass sich der Zapfkopf am bzw. auf dem Falz verrasten lässt. Eine sichere Positionierung des Zapfkopfes lässt sich dadurch gewährleisten.

Das Dichtgehäuse kann an seinem freien Ende einen Flansch oder eine umlaufende Schulter zur äußeren Anlage an den Rand der Öffnung im Deckel des Behältnisses aufweisen. Damit ist eine sichere Positionierung der stab- oder zylinderförmigen Anordnung gewährleistest. Außerdem kann das Dichtgehäuse unter bzw. hinter dem Flansch oder der Schulter eine Verrastung mit Dichtmitteln zum Abdichten gegenüber der Öffnung im Deckel des Behältnisses aufweisen, so dass nach dem Einsetzen der stab- oder zylinderförmigen Anordnung in das Bierfass durch den Abfüller eine flüssigkeits- und druckdichte Anordnung geschaffen ist, in vorteilhafter Weise gegenüber dem Stand der Technik mit einer einzigen Öffnung im Behältnis.

Das erfindungsgemäße Behältnis, bei dem es sich um ein beliebiges Getränkebehältnis handeln kann, insbesondere um ein Bierfass, weiter insbesondere um ein 5L-Party-Bierfass, umfasst die zuvor erörterte Zapf- und Regeleinrichtung zum Ausbringen der Flüssigkeit. Damit ist dieses Behältnis gegenüber herkömmlichen Behältnissen der hier in Rede stehenden Art erfinderisch.

Es gibt nun verschiedene Möglichkeiten, die Lehre der vorliegenden Erfindung in vorteilhafter Weise auszugestalten und weiterzubilden. Dazu ist einerseits auf die dem Anspruch 1 nachgeordneten Ansprüche und andererseits auf die nachfolgende Erläuterung eines bevorzugten Ausführungsbeispiels der Erfindung anhand der Zeichnung zu verweisen. In Verbindung mit der Erläuterung des bevorzugten Ausführungsbeispiels der Erfindung anhand der Zeichnung werden auch im Allgemeinen bevorzugte Ausgestaltungen und Weiterbildungen der Lehre erläutert. In der Zeichnung zeigen
- Fig. 1: in schematischer Ansicht ein Ausführungsbeispiel eines erfindungsgemäßen 5L-Party-Bierfasses mit einer Öffnung im Deckel, ohne Zapf- und Regeleinrichtung,
- Fig. 2: in einer schematischen Ansicht, geschnitten, ein 5-L-Party-Bierfass mit eingesetzter erfindungsgemäßer Zapf- und Regeleinrichtung, wobei die Zapfeinheit sich in der Transport- und Lagerposition innerhalb einer stab- oder zylinderförmigen Anordnung befindet,
- Fig. 2a: in einer schematischen Ansicht, teilweise und vergrößert, die Druck- und Regeleinrichtung des Gegenstands aus Fig. 2,
- Fig. 3: in einer schematischen Ansicht den Gegenstand aus Fig. 2, wobei die Zapfeinheit aus der stab- oder zylinderförmigen Anordnung herausgezogen ist und sich in der am Falz des Bierfasses angeklipsten Gebrauchsposition befindet,
- Fig. 4: in einer schematischen Ansicht den Gegenstand aus Fig. 3, wobei der zum Zapfen dienende Zapfhebel hochgestellt ist,
- Fig. 5: das Bierfass entsprechend der Darstellung aus Fig. 2 in einer Draufsicht,
- Fig. 6: das Bierfass entsprechend der Darstellung aus Fig. 2 in einer perspektivischen Ansicht,
- Fig. 7: das Bierfass entsprechend der Darstellung aus Fig. 2 in einer Frontalansicht,
- Fig. 8: das Bierfass entsprechend der Darstellung aus Fig. 4 in einer perspektivischen Ansicht,
- Fig. 9a: in einer schematischen Ansicht die Überdrucksicherung in der geschlossenen Position,
- Fig. 9b: in einer schematischen Ansicht die Überdrucksicherung in der geöffneten Position,
- Fig. 10a: in einer schematischen Ansicht, vergrößert und im Schnitt, die wesentlichen Bestandteile der Überdrucksicherung in der geschlossenen Position,
- Fig. 10b: in einer schematischen Ansicht, vergrößert und im Schnitt, die wesentlichen Bestandteile der Überdrucksicherung in der geöffneten Position,
- Fig. 11a: in einer schematischen Ansicht den Gegenstand aus Fig. 10a vergrößert,
- Fig. 11b: in einer schematischen Ansicht den Gegenstand aus Fig. 10b vergrößert,
- Fig. 12: in einer vergrößerten schematischen Darstellung das Gehäuse für die Überdrucksicherung,
- Fig. 13a: in einer vergrößerten Seitenansicht das Gehäuse für die Überdrucksicherung und die wesentlichen Bestandteile der Überdrucksicherung in einer Sprengdarstellung,
- Fig. 13b: in einer schematischen Vorderansicht das Gehäuse mit den eingesetzten Bestandteilen der Überdrucksicherung, und
- Fig. 14: in schematischen Ansichten die wesentlichen Bestandteile der Überdrucksicherung.

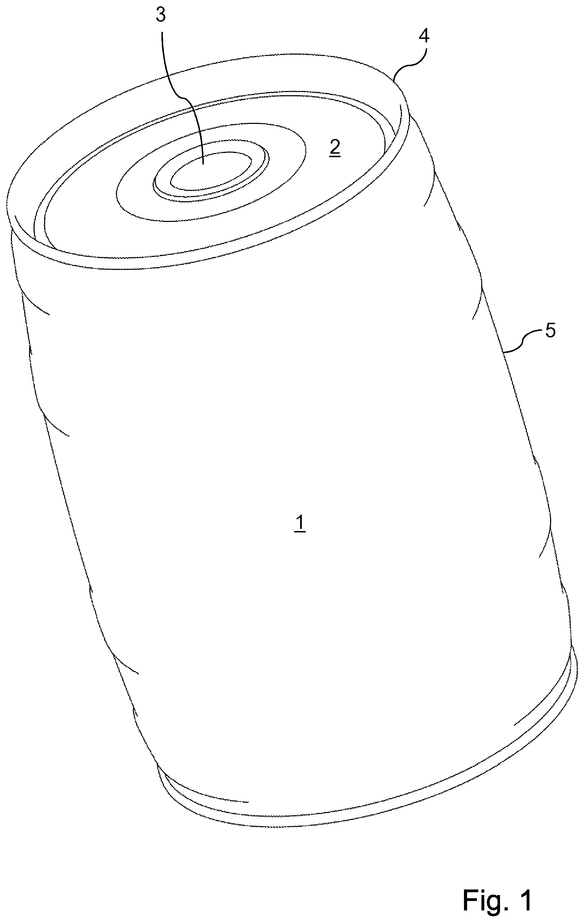

Fig. 1 zeigt in einer schematischen Ansicht ein 5L-Bierfass 1. Oben im Deckel 2 ist eine Öffnung 3 ausgebildet, die als einzige Öffnung in dem Bierfass 1 zu verstehen ist. Folglich ist bei diesem Bierfass 1 auch nur eine einzige Öffnung 3 abzudichten.

Fig. 1 zeigt des Weiteren, dass der Deckel 2 über einen Falz 4 mit der Wandung 5 verbunden ist.

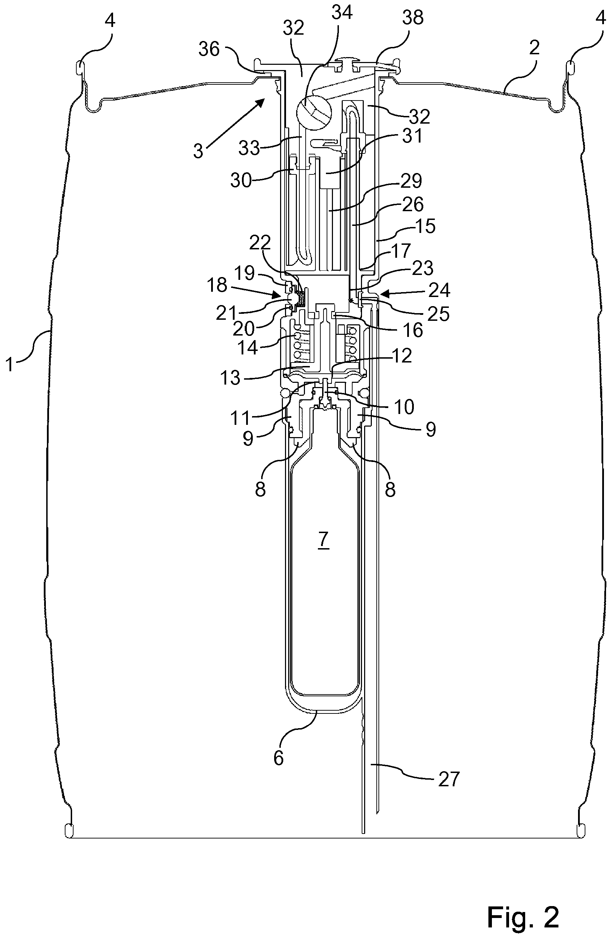

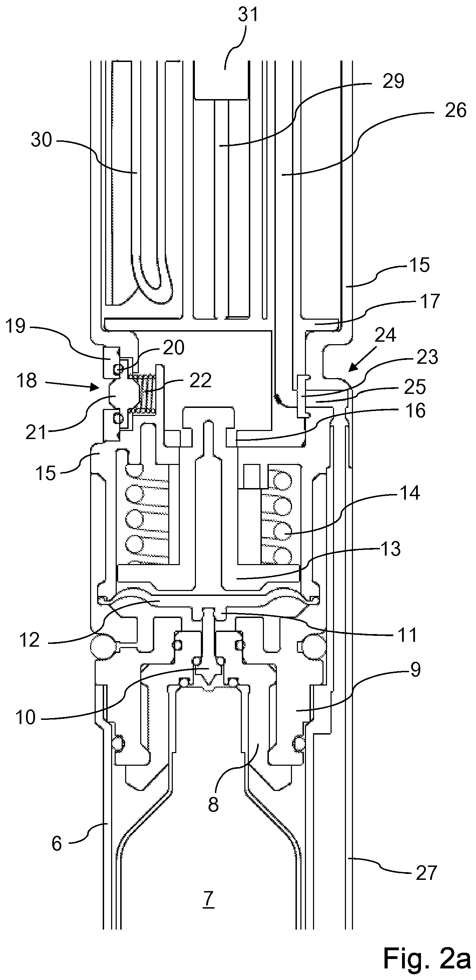

Fig. 2 zeigt in einer schematischen Schnittdarstellung das Bierfass 1 gemäß Fig. 1, wobei die erfindungsgemäße Zapf- und Regeleinrichtung in die Öffnung 3 nahezu bündig eingesteckt ist. Von unten nach oben lässt sich die Zapf- und Regeleinrichtung wie folgt beschreiben:
In einem Patronengehäuse 6 ist eine CO₂-Patrone 7 angeordnet. Die Patrone 7 ist in eine aus Kunststoff oder Edelstahl bestehende Einschraubhülse 8 eingeschraubt. Die Einschraubhülse 8 befindet sich wiederum in einer Druckhülse 9, wobei die Einschraubhülse 8 in die Druckhülse 9 eingeschraubt oder sonstwie darin befestigt sein kann.

Über der Druckhülse 9 befindet sich ein Ventilstössel 10, der mit dem Ende seines Schaftes in einen Flanschfuß 11 einer Membrane 12 eintaucht. Die Membrane 12 dient zur Betätigung des Ventilstössels 10.

Über der Membran 12 ist ein Federspanner 13 angeordnet, wobei auf dem Federspanner 13 eine Regelfeder 14 zur Anlage kommt. Der Federspanner 13 und die Regelfeder 14 sind von dem in die Druckhülse 9 eingeschraubten Dichtgehäuse 15 umgeben.

Das obere Schaftende des Federspanners 13 ragt durch eine Durchgangsöffnung 16 im Dichtgehäuse 15 bis hin zu einem Durchgang am unteren Ende des Drehkolbens 17, in dem der Federspanner 13 verrastet ist. Die Regelfeder 14 bzw. der Teller des Federspanners 13 hat keinen Kontakt zu der Membrane 12. Die Regelfeder 14 ist gestaucht.

Im Freiraum zwischen dem oberen Schaftende des Federspanners 13 und dem unteren Ende des Drehkolbens 17 ist eine Überdrucksicherung 18 vorgesehen. Die Überdrucksicherung 18 umfasst eine Siegelscheibe 19 mit einer durch einen O-Ring 20 abgedichteten Berstscheibe 21. Diese wird durch eine Druckfeder 22, die sich innen am Dichtgehäuse 15 abstützt, gegen die Berstscheibe 21 nach außen gedrückt.

Gegenüber der Überdrucksicherung 18 ist eine am Drehkolben 17 angebrachte Dichtfläche 23, die gegen einen Durchgangsbogen 24 im Dichtgehäuse 15 abdichtet. Auf der gegenüberliegenden Seite, längs der Dichtfläche 23, ist ein Eintrittsloch 25 am Dichtgehäuse 15 für den Fließkanal des Drehkolbens 17 vorgesehen.

Am äußeren unteren Ende des Durchgangsbogens 24 des Dichtgehäuses 15 fährt das am Patronengehäuse 6 angebrachte bzw.- verlaufende obere Ende eines Steigrohrs 27 formschlüssig in das Gehäuse 1.

In den oberen, inneren Freiraum 28 des Dichtgehäuses 15 ragt der Fließkanal 26 und ein Aktivierungssteg 29 des Drehkolbens 17.

Ein an dem Fließkanal 26 des Drehkolbens 17 befestigter Schlauch 30 sowie ein in den Aktivierungssteg 29 eingeschobener Aktivierungszapfen 31 des Zapfkopfes 32 schließen sich an. Gegenüber dem Aktivierungszapfen 31 befindet sich ein Eintrittskanal 33, an dem das andere freie Ende des Schlauchs 30 befestigt ist.

Der Eintrittskanal 33 des Zapfkopfes 32 mündet in eine Ventilwalze 34, an der ein Zapfhebel 35 befestigt ist.

Am Flansch des Dichtgehäuses 15 ist eine Dichtung 36 vorgesehen, die gegenüber der Außenwandung des Fassdeckels 2 im Bereich der Öffnung 3 wirkt. Außerdem ist ein Originalitätssiegel 38 vorgesehen, welches mit dem Zapfkopf 32 verbunden ist.

Fig. 2a zeigt die wesentlichen zu Fig. 2 erörterten Details in vergrößerter Darstellung.

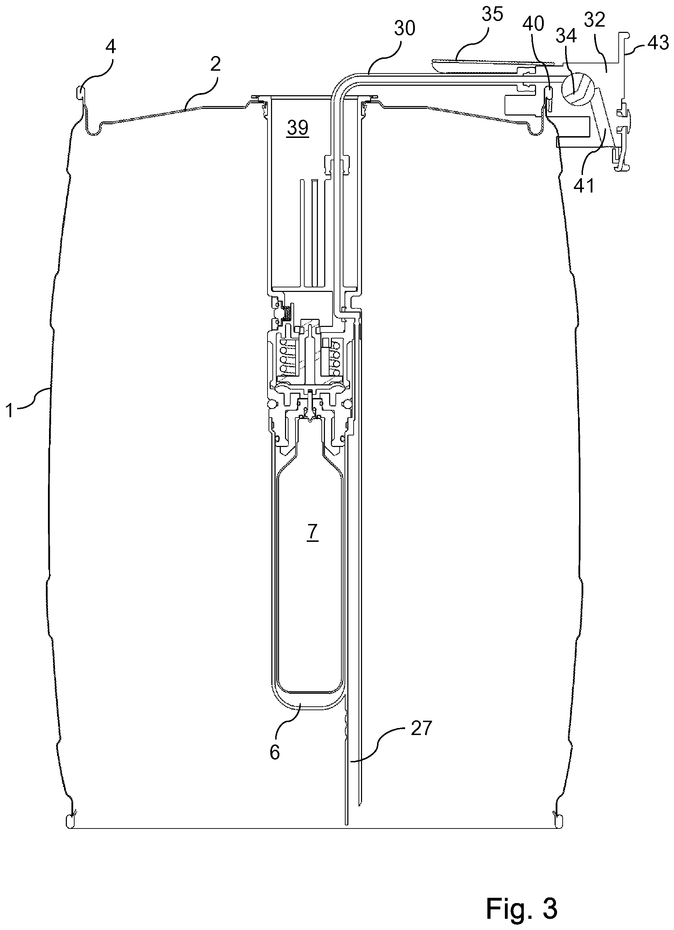

Fig. 3 unterscheidet sich von Fig. 1 dadurch, dass die Zapfeinheit aus ihrer Transport- und Lagerposition in die entnommene Gebrauchsposition verbracht ist. Im Konkreten ist der Zapfkopf 32 auf den Falz 4 des Fassdeckels 2 aufgesteckt. Es ist gut zu erkennen, dass der Schlauch 30 den Zapfkopf 32 mit dem Steigrohr 27 über den Drehkolben 17 strömungsverbindet. Der nach außen offene Stauraum 39 ist nun leer und nach außen offen. Er ist gegenüber dem Fassinneren abgedichtet.

Des Weiteren lässt Fig. 3 erkennen, dass das zum Zapfen dienende Betätigungsorgan, nämlich der Zapfhebel 35, sich in einer flachgelegten Position befindet.

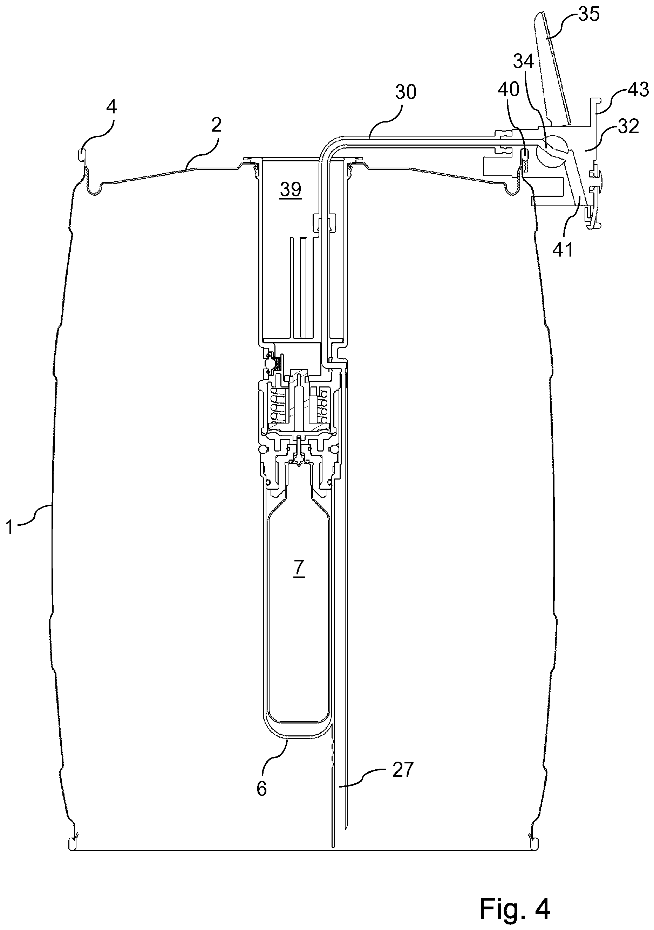

Gemäß Fig. 4 ist der Zapfhebel 35 aufgestellt und kann betätigt werden, wodurch die Ventilwalze 34 gedreht wird.

Die Fig. 2 bis 4 zeigen des Weiteren, dass der Zapfkopf 32 eine schlitzartige Klemmeinrichtung 40 umfasst, mit der der Zapfkopf 32 auf den Falz 4 klemmend aufgesteckt ist.

Die Fig. 2 bis 4 zeigen des Weiteren den im Zapfkopf 32 ausgebildeten, nach unten gerichteten Auslauf 41.

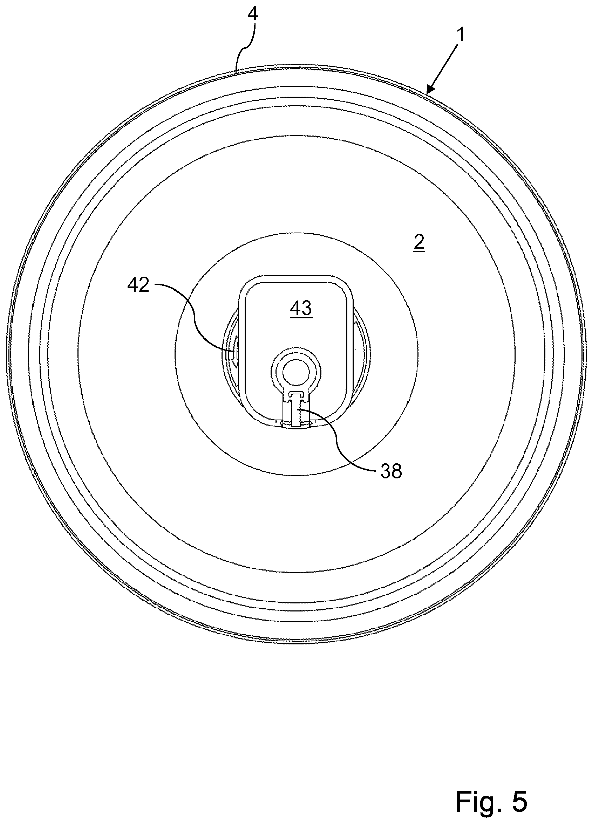

Fig. 5 zeigt das mit der erfindungsgemäßen Zapf- und Regeleinrichtung ausgestattete Bierfass von oben, wobei sich die Zapfeinheit in der Transport- und Lagerposition befindet. Ein Pfeil 42 deutet die Drehrichtung an, in der die von oben erkennbare Lasche oder Schild 43 zu drehen ist, damit der im Stauraum 39 unter einer zumindest geringfügigen Spannung befindliche Zapfkopf 32 aus dem Stauraum 39 heraustritt.

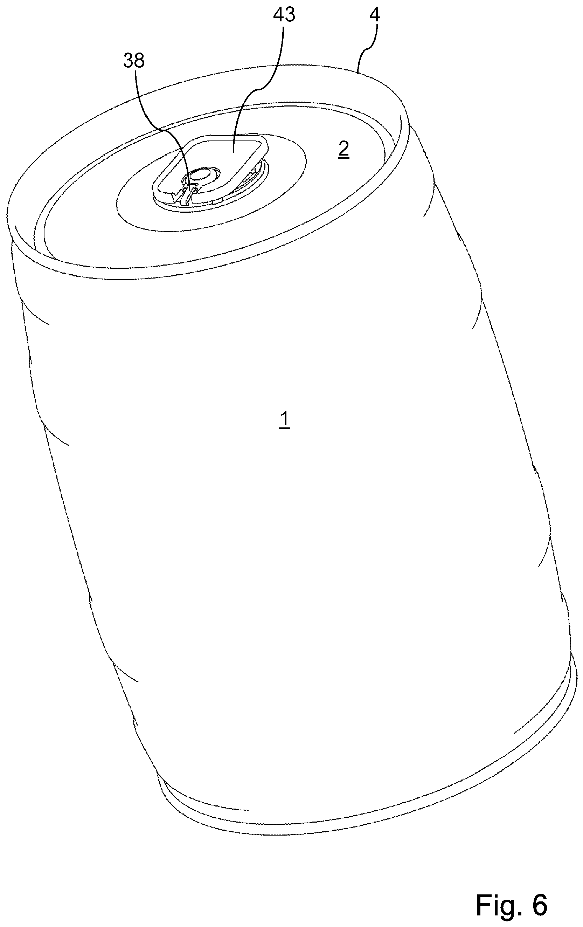

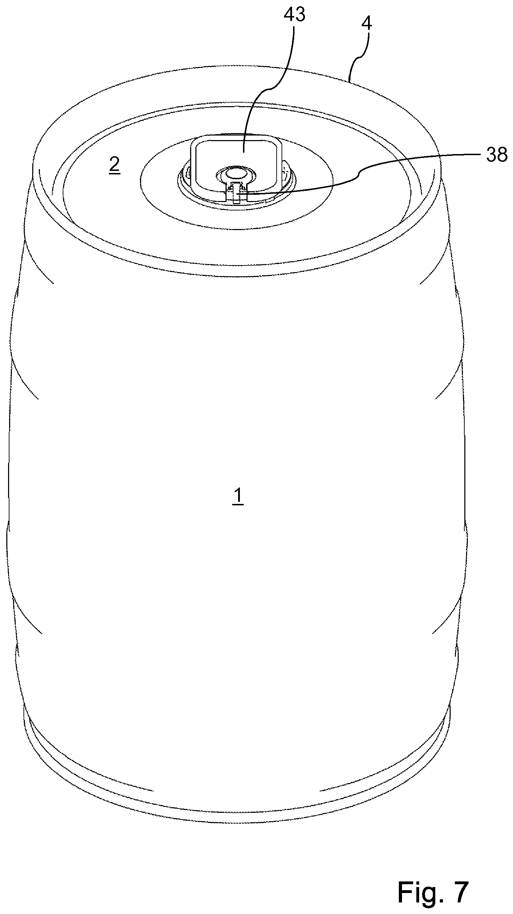

Fig. 6 zeigt das mit der erfindungsgemäßen Zapf- und Regeleinrichtung ausgestattete Fass in einer schematischen, perspektivischen Seitenansicht, Fig. 7 zeigt den Gegenstand aus Fig. 6 in einer Vorderansicht.

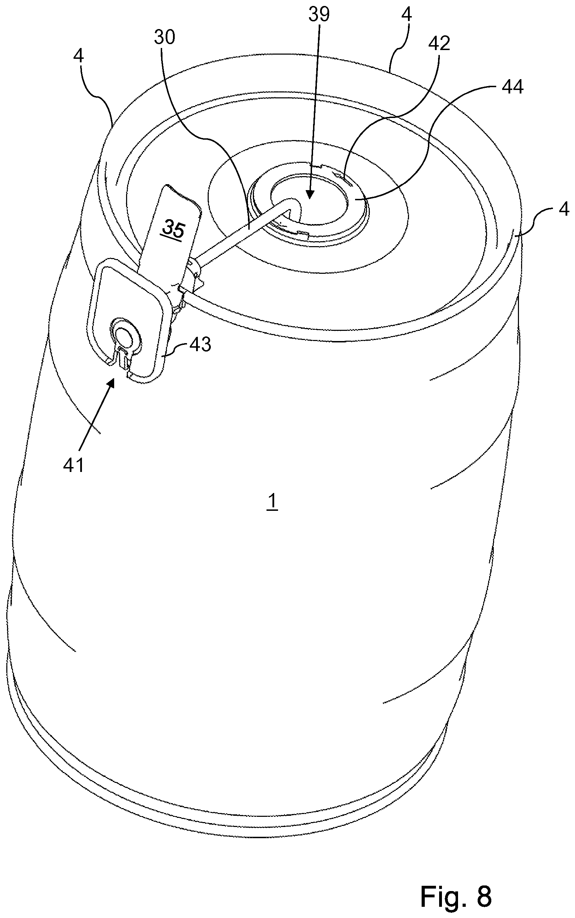

Gemäß der Darstellung in Fig. 8 befindet sich die Zapfeinheit in der Gebrauchsposition und der Zapfkopf 32 ist am oberen äußeren Rand, d.h. am Falz 4 des Bierfasses 1 aufgesteckt. Der Zapfhebel 35 ist zum Zapfen aufgestellt. Der Schlauch 30 führt aus dem Fassinneren heraus, durch die Öffnung 3 zum Zapfkopf 32. Des Weiteren ist zu erkennen, dass an der Öffnung 3 bzw. am oberen Ende des Stauraums 39 eine Befestigungsmanschette oder Flansch 44 vorgesehen ist, an der der Zapfkopf im eingesteckten Zustand innerhalb des Stauraums 39 schraubenartig oder bajonettartig festlegbar ist.

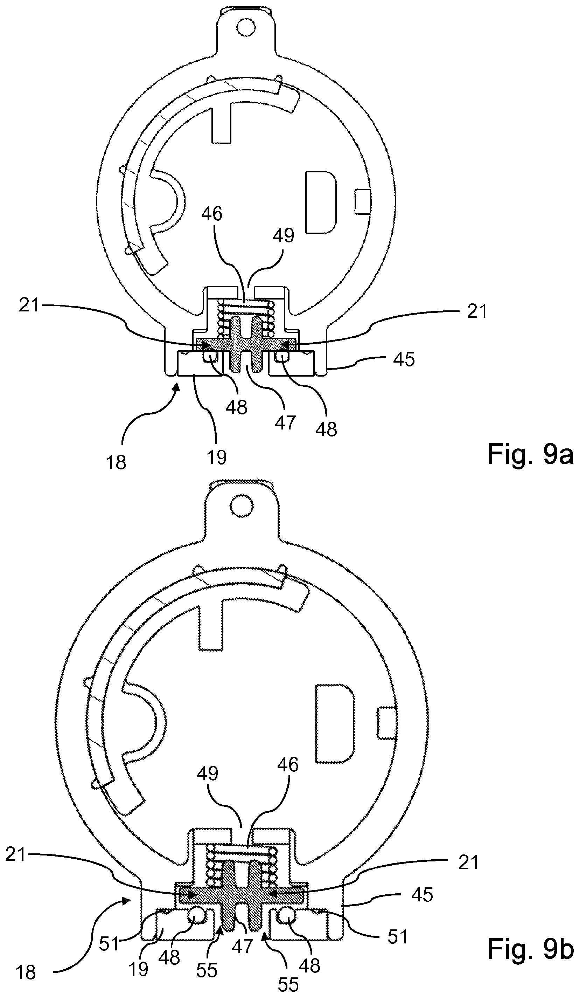

Fig. 9a zeigt in einer schematischen Ansicht die Überdrucksicherung 18 mit den jeweiligen Bestandteilen, eingesetzt in ein eigens dafür vorgesehenen Gehäuse 45. Zu der Überdrucksicherung 18 gehören eine Feder 46, eine Berstscheibe 21, die im Sinne eines Berstrings ausgeführt ist, und ein Zentrier-/Positionierstern 47.

Des Weiteren ist eine Dichtung 48 im Sinne eines Dichtrings vorgesehen. Nach außen schließt sich eine Siegelscheibe 19 an.

Nach innen ist ein Atmosphärenauslass 49 ausgebildet.

Fig. 9b zeigt die Anordnung der Überdrucksicherung 18 im offenen bzw. geöffneten Zustand, wonach die Berstscheibe 21 mit dem Zentrier-/Positionierstern 47 gegen die Feder 46 gedrückt ist, sodass keine Anlage mit der Dichtung 48 mehr besteht. Ein Strömungspfad 55 ist somit frei.

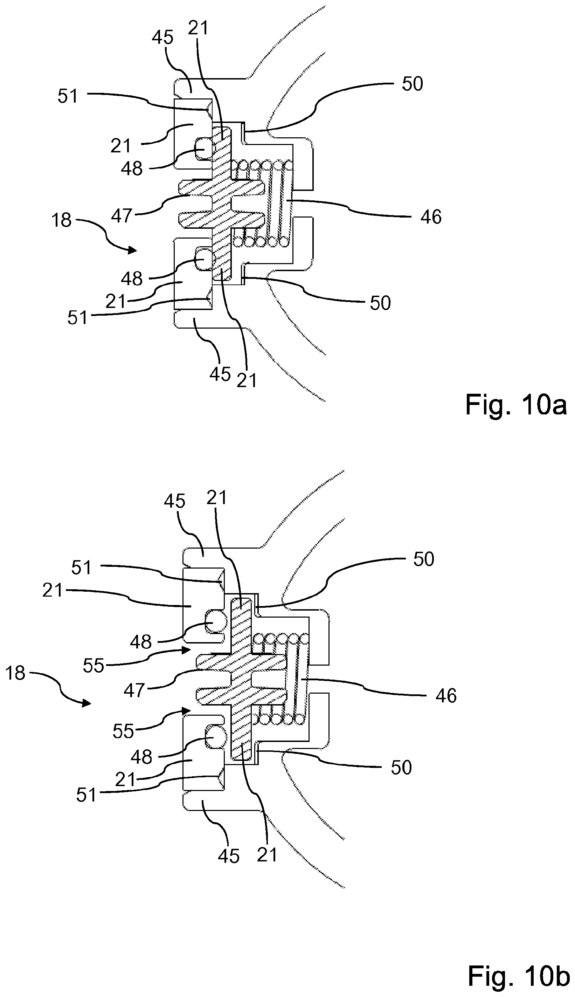

Die Fig. 10a und 10b zeigen die Situation aus den Figuren 9a und 9b in Bezug auf die Überdrucksicherung 18 in einer vergrößerten Darstellung, wonach die einzelnen relevanten Bauteile besser zu erkennen sind. Außerdem zeigen die Fig. 10a und 10b deutlich die Vorkehrung von Schnellentlüftungsnuten 50. Zur Funktion sei zur Vermeidung von Wiederholungen auf den allgemeinen Teil der Beschreibung verwiesen.

Außerdem ist die Vorkehrung einer Schweiß- oder Klebestelle 51 angedeutet, wodurch die Siegelscheibe 19 am Gehäuse 45 befestigt ist. Die Befestigung kann auch als Rastung der Siegelscheibe 19 ausgeführt sein.

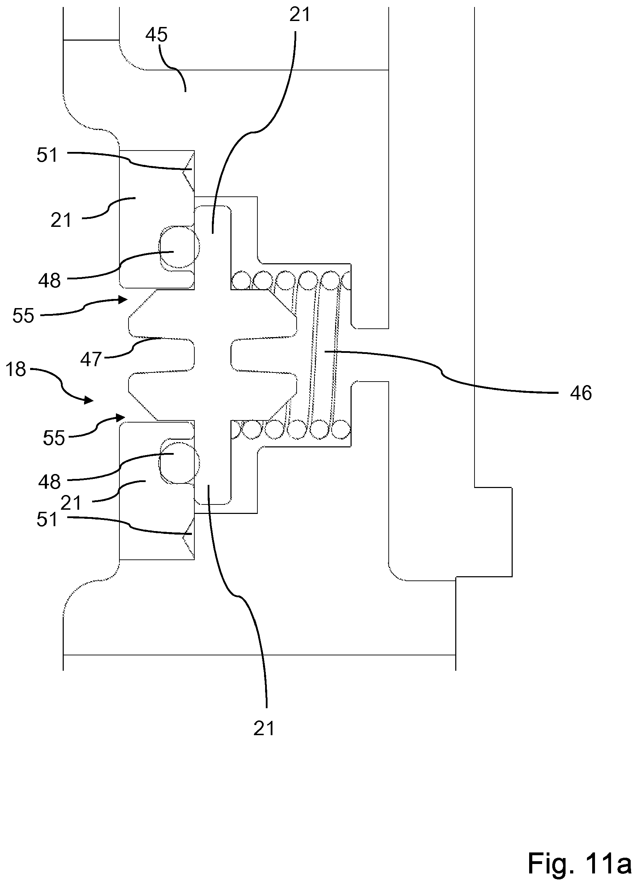

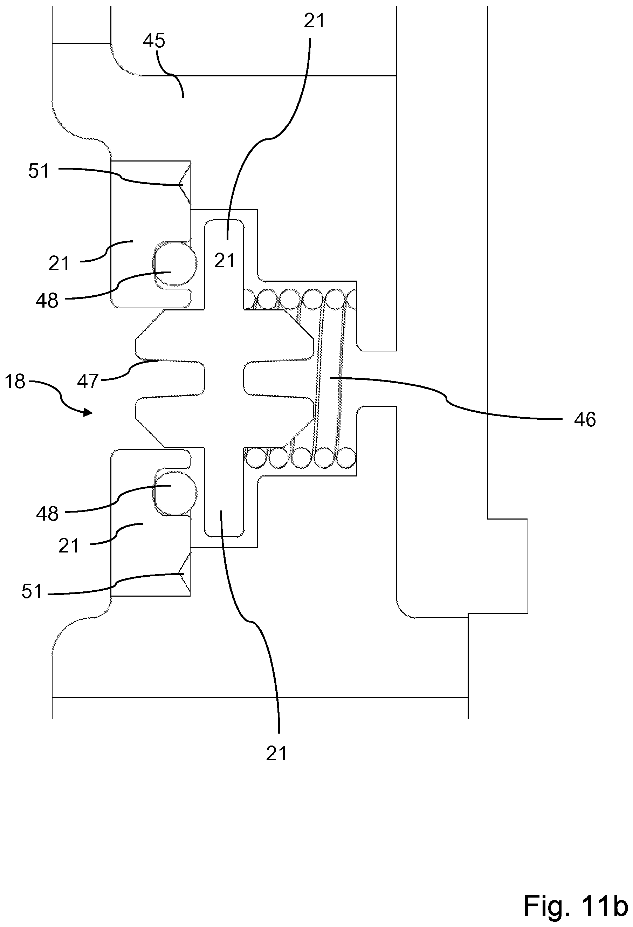

Die Fig. 11a und 11b zeigen die Anordnung aus den Fig. 10a und 10b in einer abermals vergrößerten Darstellung, sodass sich weitere Ausführungen hierzu erübrigen.

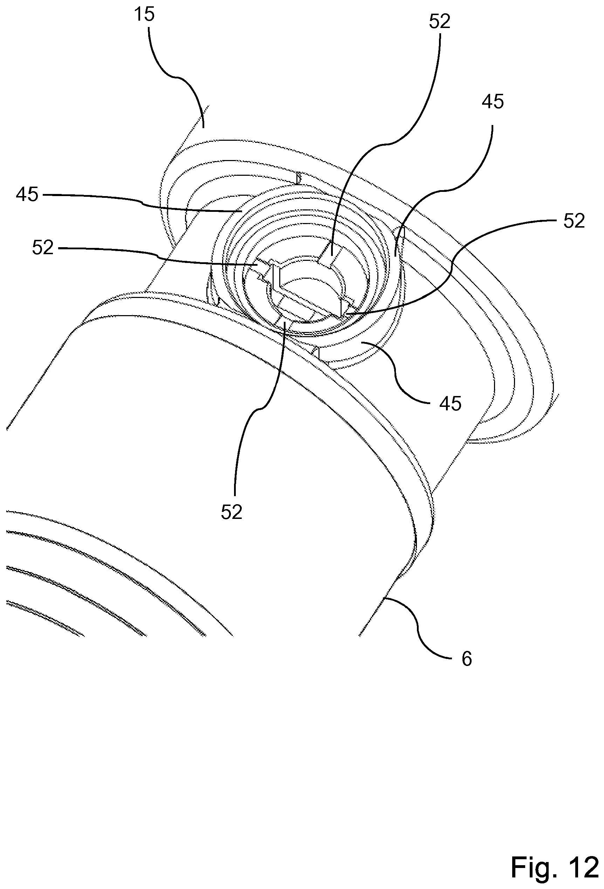

Fig. 12 zeigt das in der Anordnung ausgebildete Gehäuse 45, ohne den Einsatz der einzelnen Elemente der Überdrucksicherung. Es ist sehr gut die Vorkehrung von Schnellentlüftungsnuten 52 erkennbar.

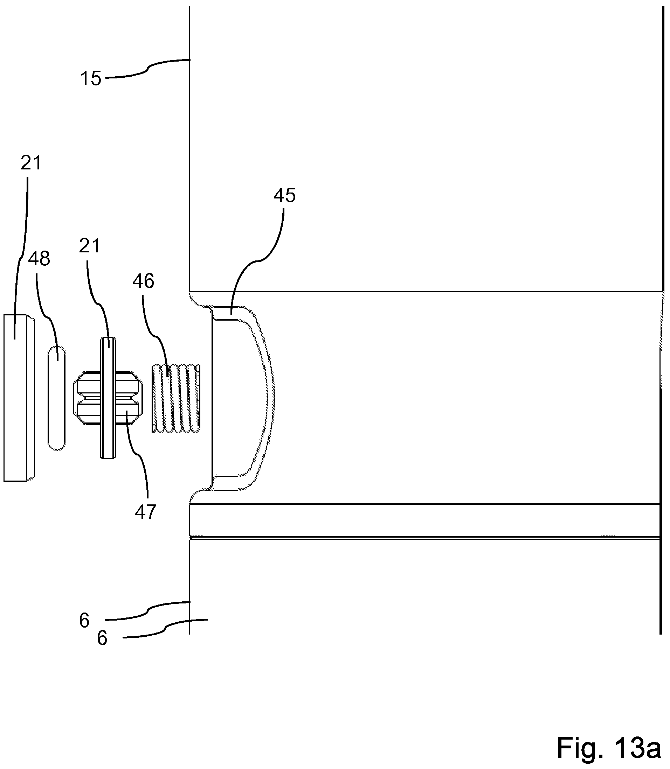

Fig. 13a zeigt das Gehäuse 45 für die Überdrucksicherung 18 von der Seite her in einer Sprengdarstellung. Die einzelnen Bestandteile der Überdrucksicherung sind erkennbar, nämlich die Feder 46, die Berstscheibe 21 mit dem Zentrier-/Positionierstern 47, die Dichtung 48 und, ganz außen, die Siegelscheibe 19.

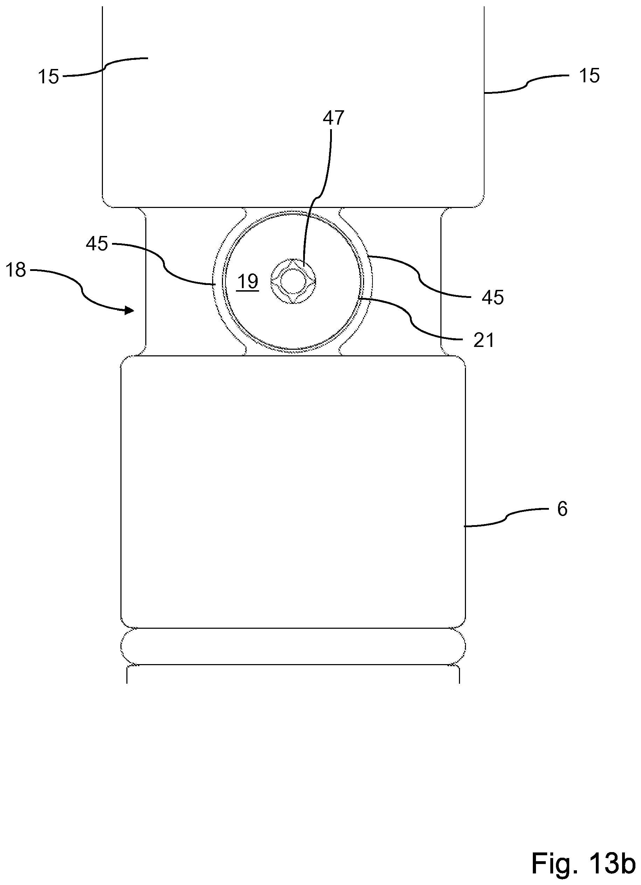

Fig. 13b zeigt die Anordnung der Überdrucksicherung 18 von vorne, d.h. in einer Draufsicht, mit den jeweiligen Bestandteilen.

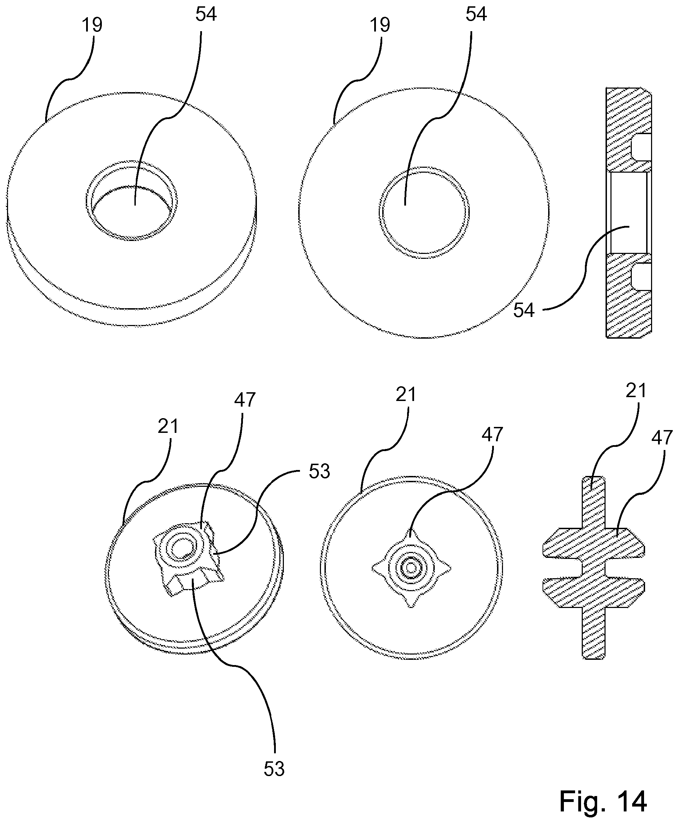

Weiter zeigt Fig. 14 in schematischen Ansichten mögliche Ausführungsbeispiele der Siegelscheibe 19 und der Berstscheibe 21, wobei dort der Zentrier-/Positionierstern 47 eingesetzt bzw. integriert ist. Einströmkanäle 53 sind angedeutet.

Bei der Siegelscheibe 19 ist die mittige Einströmöffnung 54 gezeigt.

Zu der grundsätzlichen Funktion der zuvor erörterten Zapf- und Regeleinrichtung sei in Stichworten Folgendes ausgeführt:
- Der Ventilstössel sticht mit seiner Spitze die CO₂-Patrone an. Dies geschieht entweder bereits bei der Montage durch den Abfüller oder bei entsprechender Ausgestaltung des Dichtgehäuses und des Drehkolbens sowie des Federspanners durch den Verbraucher. Sobald die CO₂-Patrone aktiviert ist, steht unten am Ventilstössel der zum Fördern der Flüssigkeit dienende Druck an.
- Der Endkunde dreht den in der Transportposition befindlichen Zapfkopf gemäß einer Funktionsanweisung zwischen 10 bis 120° mit oder gegen den Uhrzeigersinn, je nach Ausführung.
- Der Zapfkopf ist mit seinem Aktivierungszapfen im Aktivierungssteg mit dem Drehkolben verbunden und dreht diesen entsprechend mit.
- Aufgrund der Drehbewegung des Drehkolbens wird das Eintrittsloch an der Dichtfläche des Drehkolbens mit dem Austrittsloch des Durchgangsbogens des Dichtgehäuses in Überdeckung gebracht. Der Fluidkanal (Steigrohr, Fließkanal, Schlauch) ist damit frei gegeben.
- Obere Aussparungen am Flansch des Dichtgehäuses geben den Zapfkopf frei, der sich nach oben aus dem Dichtgehäuse aus seiner Transportposition entnehmen lässt.
- Im Zapfkopf ist eine Ventilwalze ausgebildet, auf die ein Zapfhebel greift bzw. wirkt. Außerdem ist am Zapfkopf das freie Ende des Schlauchs befestigt. Der Zapfkopf wird gemeinsam mit dem Schlauch aus dem Dichtgehäuse bzw. aus dem Stauraum des Dichtgehäuses herausgezogen. Der Zapfkopf wird dann per Klemmeinrichtung, genauer gesagt an seiner Einkerbung, mit einem gewissen Druck von oben auf den Falz des Fasses aufgedrückt und kann dort mittels Rastnase unter dem Falz verrasten.
- Danach wird der Zapfhebel nach oben bewegt. Hierdurch dreht er die Ventilwalze. Diese gibt den Strömungspfad von Fluidkanal und Zapfkanal frei. Das Fluid kann durch den Auslauf austreten.
- Beim Zapfen sinkt der Druck im Inneren des Behälters. Sobald der Druck unter ein vorgegebenes Niveau sinkt, drückt die Regelfeder die Membran in Richtung Ventilstössel nach unten. Hierdurch entweicht CO₂ aus der CO₂-Patrone in Richtung Druckkammer und gelangt über den Ausströmungskanal unter dem O-Ring in Richtung Behälter. Der Druck im Behälter steigt wieder an. Zwischen Druckkammer und Behälter entsteht ein Druckausgleich. Beide Bereiche haben den gleichen Druck. Oberhalb der Membran herrscht Atmosphärendruck. dieser entsteht durch den freien Zugang zur Atmosphäre über die Durchgangsöffnung zwischen dem Federspanner, dem Drehkolben und dem Dichtgehäuse.
- Der Regeldruck in der Druckkammer wird durch die konkrete Ausführung der Regelfeder bestimmt, die bei vorherrschendem Druck über die Wirkfläche in der Druckkammer auf die Membran nach oben gedrückt wird. Der Ventilstössel wird dann nicht mehr aktiv aus der Regelfeder bzw. der Membran nach unten gedrückt. Es kann kein CO₂ mehr von der CO₂-Patrone in Richtung Druckkammer ausströmen.
- Der Druckausgleich ist so lange unterbunden bis erneut Druck aus dem Behälter durch das Zapfen entweicht. Der zuvor erörterte Regelvorgang beginnt erneut und widerholt sich beliebig, solange sich im Behältnis Flüssigkeit befindet bzw. solang die CO₂-Patrone Druckmedium zur Verfügung stellt.
- Sollte es zu einer Fehlfunktion beim Regeln des Drucks kommen, beispielsweise wenn CO₂ unkontrolliert und zu schnell in den Behälter entweicht, oder sollte der Behälter aufgrund einer großen Erwärmung in einen kritischen Druckzustand bis hin zum Berstbereich gelangen, kann mithilfe der eingebauten Überdrucksicherung das CO₂ ohne Bersten des Behälters kontrolliert entweichen.

Die Überdrucksicherung arbeitet wie folgt:
- Es ist eine Siegelscheibe mit Loch in der Mitte vorgesehen. Sie ist durch einen O-Ring von der Berstscheibe getrennt und abgedichtet. Hinter der Berstscheibe ist eine Feder angeordnet, die gegen die Berstscheibe drückt. Steigt der Druck im Inneren des Behälters über einen vorgegebenen Wert, hebt die Berstscheibe durch den vorherrschenden Druck im Loch der Siegelscheibe vom O-Ring ab. Die dahinterliegende Feder wird gestaucht. Entsprechend ist das Loch in der Siegelscheibe freigegeben und es kann an der Berstscheibe vorbei über das Dichtgehäuse Druck nach außen in die Atmosphäre entweichen.

Voranstehende Ausführungen zur Funktion der erfindungsgemäßen Zapfs- und Regeleinrichtung schränken diese über die konkreten Merkmale der Patentansprüche nicht ein. Sie dienen vielmehr zur Erörterung.

Hinsichtlich weiterer vorteilhafter Ausgestaltungen der erfindungsgemäßen Vorrichtung wird zur Vermeidung von Wiederholungen auf den allgemeinen Teil der Beschreibung sowie auf die beigefügten Ansprüche verwiesen.

Schließlich sei ausdrücklich darauf hingewiesen, dass das voranstehend beschriebene Ausführungsbeispiele der erfindungsgemäßen Lehre lediglich zur Erörterung der beanspruchten Lehre dient, diese jedoch nicht auf das Ausführungsbeispiel einschränkt.

### Bezugszeichenliste

- 1: Behältnis, Fass, Bierfass
- 2: Deckel, Fassdeckel
- 3: Öffnung (oben im Behältnis)
- 4: Falz
- 5: Wandung (des Behältnisses)
- 6: Patronengehäuse
- 7: Patrone, Druckpatrone
- 8: Einschraubhülse
- 9: Druckhülse
- 10: Ventilstössel
- 11: Flanschfuß
- 12: Membrane
- 13: Federspanner
- 14: Regelfeder
- 15: Dichtgehäuse
- 16: Durchgangsöffnung
- 17: Drehkolben
- 18: Überdrucksicherung
- 19: Siegelscheibe
- 20: O-Ring
- 21: Berstscheibe, Berstring
- 22: Druckfeder
- 23: Dichtfläche
- 24: Durchgangsbogen
- 25: Eintrittsloch, Eintrittsöffnung
- 26: Fließkanal
- 27: Steigrohr
- 28: Freiraum
- 29: Aktivierungssteg
- 30: Schlauch
- 31: Aktivierungszapfen
- 32: Zapfkopf
- 33: Eintrittskanal
- 34: Ventilwalze
- 35: Zapfhebel
- 36: Dichtung
- 37: nicht belegt
- 38: Originalitätssiegel
- 39: Stauraum (im Dichtgehäuse)
- 40: Klemmeinrichtung
- 41: Auslauf
- 42: Pfeil
- 43: Lasche, Schild
- 44: Befestigungsmanschette, Flansch
- 45: Gehäuse (der Überdrucksicherung)
- 46: Feder
- 47: Zentrier-/Positionierstern
- 48: Dichtung (auch 20)
- 49: Atmosphärenauslass
- 50: Schnellentlüftungsnut
- 51: Schweiß-/Klebestelle, Raststelle
- 52: Schnellentlüftungsnut
- 53: Einströmkanal
- 54: Einströmöffnung
- 55: Strömungspfad

## Patentansprüche

1. Zapf- und Regeleinrichtung zum Ausbringen einer Flüssigkeit aus einem Behältnis (1), insbesondere aus einem Getränkebehältnis, vorzugsweise zum Ausbringen eines Bieres oder eines Biergetränks aus einem Bierfass, vorzugsweise aus einem 5L-Party-Bierfass,
mit einer stab- oder zylinderförmigen Anordnung aus Druckeinheit, Regeleinheit und Zapfeinheit, die vorzugsweise durch eine Öffnung (3) im Deckel (2) des Behältnisses (1) nahezu bündig in das Behältnis (1) einsteckbar ist, wobei die Zapfeinheit von einer in die Anordnung eingesteckten Transport- und Lagerposition in eine aus der Anordnung entnommene und mit dieser strömungsverbundene Gebrauchsposition verbringbar ist und wobei die entnommene Zapfeinheit an das Behältnis (1), vorzugsweise an dessen Rand, Falz (4) oder dgl. zur Handhabung oder Betätigung anbringbar ist, **dadurch gekennzeichnet, dass** zwischen der Regeleinheit und der Zapfeinheit eine Überdrucksicherung (18) vorgesehen ist.

2. Zapf- und Regeleinrichtung nach Anspruch 1, **dadurch gekennzeichnet, dass** die Überdrucksicherung (18) eine Federkraft beaufschlagte Berstscheibe (21) nebst Siegelring umfasst.

3. Zapf- und Regeleinrichtung nach Anspruch 1 oder 2, **dadurch gekennzeichnet, dass** die Überdrucksicherung (18) einen Zentrier- und Positionierstern (47) umfasst, auf dessen Innenseite die Feder (46) und auf dessen Außenseite eine Siegelscheibe (19), ggf. mit einer dazwischen angeordneten Dichtung (36), vorgesehen ist, wobei um einen Zentrier- und Positionierstern (47) der Berstscheibe (21) Fluidum in das Innere der Überdrucksicherung (18) dann eindringen kann, wenn die Berstscheibe (21) von der Dichtung (36) abhebt.

4. Zapf- und Regeleinrichtung nach Anspruch 2 oder Anspruch 3, sofern dieser auf Anspruch 2 rückbezogen ist, **dadurch gekennzeichnet, dass** die Berstscheibe (21) derart ausgestaltet und angeordnet ist, dass sie bei Überschreiten eines vorgegebenen Drucks innerhalb des Behältnisses (1) von der Dichtung (36) abhebt und dabei über Einströmkanäle (53) um einen Zentrier- und Positionierstern (47) der Berstscheibe (21) eine Strömung und somit eine Druckentweichung ermöglicht.

5. Zapf- und Regeleinrichtung nach einem der Ansprüche 2 oder nach Anspruch 3 oder 4, sofern diese auf Anspruch 2 rückbezogen sind, **dadurch gekennzeichnet, dass** ein Atmosphärenauslass (49) vorgesehen ist, über den bei Drucküberschreitung Fluidum um die Berstscheibe (21) herum nach außerhalb strömen bzw. entweichen kann.

6. Zapf- und Regeleinrichtung nach Anspruch 2 oder nach einem der Ansprüche bis 5, sofern diese auf Anspruch 2 rückbezogen sind, **dadurch gekennzeichnet, dass** Schnellentlüftungsnuten (52) vorgesehen sind, durch die bei Anlage der Berstscheibe (21) an einer Weg-Begrenzung Fluidum trotz Anlage der Berstscheibe (21) über den Atmosphärenauslass (49) entweichen kann.

7. Zapf- und Regeleinrichtung nach einem der Ansprüche 1 bis 6, **dadurch gekennzeichnet, dass** die Druckeinheit als unteres Gehäuseteil ein endseitiges Patronengehäuse (6) mit einer darin angeordneten Gaspatrone (7), vorzugsweise einer CO2-Patrone, umfasst, an das sich als zweites Gehäuseteil ein Dichtgehäuse (15) anschließt, in dem die Zapfeinheit in ihrer Transport- und Lagerposition weitestgehend angeordnet ist und das Dichtgehäuse (15) am freien Ende abschließt, wobei
zwischen den beiden Gehäuseteilen ein mittleres Gehäuseteil oder ein Übergangsbereich in den beiden Gehäuseteilen mit der Regeleinheit ausgebildet sein kann.

8. Zapf- und Regeleinrichtung nach Anspruch 7, **dadurch gekennzeichnet, dass** außerhalb des Patronengehäuses (6) ein Steigrohr (27) zum druckbedingten Aufsteigen der Flüssigkeit ausgebildet ist, welches im Bereich des Dichtgehäuses (15) in dieses mündet und im Innern des Dichtgehäuses (15) in einen internen Fließkanal (26) mündet, der über eine elastische Strömungsverbindung mit einem Zapfkanal der Zapfeinheit strömungsverbunden ist, wobei
die Strömungsverbindung als elastischer Schlauch (30) ausgeführt ist, der gerade so lang ist, dass die Zapfeinheit in ihre Gebrauchsposition verbringbar ist.

9. Zapf- und Regeleinrichtung nach einem der Ansprüche 1 bis 8, **dadurch gekennzeichnet, dass** die Druckeinheit eine Druckhülse (9) mit einer Einschraubhülse (8) mit Ventilstössel (10) umfasst, der über die damit wirkverbundene Regeleinheit betätigbar ist, wobei die Druckpatrone (7) in die Einschraubhülse (8) eingeschraubt ist und über den Ventilstössel (10) betätigbar ist, wobei
die Regeleinheit eine auf den Ventilstössel (10) wirkende Membran (12) umfassen kann, die dem Druck einer zwischen der Druckhülse (9) und der Membran (12) ausgebildeten Druckkammer ausgesetzt ist und gegen den Druck eines Federkraft beaufschlagten Druckspanners die Druckpatrone (7) über den Ventilstössel (10) öffnet oder schließt.

10. Zapf- und Regeleinrichtung nach einem der Ansprüche 1 bis 9, **dadurch gekennzeichnet, dass** die Zapfeinheit einen Zapfkopf (32) mit einem sich an den elastischen Schlauch (30) anschließenden Zapfkanal und einen zur Betätigung dienendem Zapfhebel (35) umfasst, wobei
die Zapfeinheit eine Ventilwalze (34) umfassen kann, die auf Betätigung des Zapfhebels (35) den Zapfkanal sukzessive öffnet oder schließt.

11. Zapf- und Regeleinrichtung nach Anspruch 10, **dadurch gekennzeichnet, dass** die Zapfeinheit an ihrem stirnseitigen Ende ein Handhabungsorgan zum Herausziehen der Zapfeinheit aus der Transportposition in die Betätigungsposition umfasst.

12. Zapf- und Regeleinrichtung nach Anspruch 11, **dadurch gekennzeichnet, dass** in der Transportposition ein Originalitätssiegel (38) den Zapfkopf (32) mit dem Dichtgehäuse (15) lösbar verbindet und ggf. das freie Ende des Zapfkanals verschließt, welches sich beim Herausziehen der Zapfeinheit mittels Handhabungsorgan von dem Dichtgehäuse (15) irreversibel löst oder bricht und ggf. den Zapfkanal zum freien Auslauf (41) freigibt.

13. Zapf- und Regeleinrichtung nach einem der Ansprüche 10 bis 12, **dadurch gekennzeichnet, dass** im Zapfkopf (32) eine Klemmeinrichtung (40) vorgesehen ist, die zum klemmenden Aufstecken des Zapfkopfes (32) auf den Rand oder Falz (4) des Behältnisses (1) dient.

14. Zapf- und Regeleinrichtung nach Anspruch 7 oder einem der Ansprüche 8 bis 13, sofern diese auf Anspruch 7 rückbezogen sind, **dadurch gekennzeichnet, dass** das Dichtgehäuse (15) an seinem freien Ende einen Flansch oder eine umlaufende Schulter zur äußeren Anlage an den Rand der Öffnung (3) im Deckel (2) des Behältnisses (1) aufweist, wobei
das Dichtgehäuse (15) unter bzw. hinter dem Flansch oder der Schulter eine Verrastung mit Dichtmitteln zum Abdichten gegenüber der Öffnung (3) im Deckel (2) des Behältnisses (1) aufweisen kann.

15. Behältnis (1), insbesondere Getränkebehältnis, vorzugsweise Bierfass für Bier oder für ein Biergetränk, beispielsweise 5L-Party-Bierfass, mit einer Zapf- und Regeleinrichtung zum Ausbringen einer Flüssigkeit nach einem der Ansprüche 1 bis 14.

## Claims

1. Tapping and regulating device for dispensing a liquid from a container (1), in particular from a beverage container, preferably for dispensing a beer or a beer beverage from a beer keg, preferably from a 5 liter party keg,
with a rod-shaped or cylindrical arrangement composed of a pressure unit, a regulating unit, and a tapping unit, which arrangement can preferably be inserted almost flush into the container (1) through an opening (3) in the lid (2) of the container (1), wherein the tapping unit can be transferred from a transport and storage position, in which it is inserted into the arrangement, to a use position, in which it is withdrawn from the arrangement and fluidically connected thereto, and wherein the withdrawn tapping unit can be mounted on the container (1), preferably to its edge, fold (4) or the like, for handling or actuation, **characterized in that** an overpressure safety device (18) is provided between the regulating unit and the tapping unit.

2. Tapping and regulating device according to claim 1, **characterized in that** the overpressure safety device (18) comprises a spring-loaded bursting disc (21) together with a sealing ring.

3. Tapping and regulating device according to claim 1 or 2, **characterized in that** the overpressure safety device (18) comprises a centering and positioning star (47), on the inside of which the spring (46) and on the outside of which a sealing disc (19) are provided, possibly with a seal (36) arranged between them, wherein fluid can penetrate into the interior of the overpressure safety device (18) around the centering and positioning star (47) of the bursting disc (21) when the bursting disc (21) lifts off from the seal (36).

4. Tapping and regulating device according to claim 2 or 3, if referring back to claim 2, **characterized in that** the bursting disc (21) is designed and arranged in such a way that, when a predetermined pressure inside the container (1) is exceeded, it lifts from the seal (36) and thereby enables a flow and thus a pressure escape via inflow channels (53) around a centering and positioning star (47) of the bursting disc (21).

5. Tapping and regulating device according to one of claims 2 or 3 or 4, if referring back to claim 2, **characterized in that** an atmospheric outlet (49) is provided through which fluid can flow or escape to the outside around the bursting disc (21) when the pressure is exceeded.

6. Tapping and regulating device according to claim 2 or one of claims 3 to 5, if referring back to claim 2, **characterized in that** quick venting grooves (52) are provided through which fluid can escape via the atmospheric outlet (49) when the bursting disc (21) is abutting a travel limit, despite contact of the bursting disc (21).

7. Tapping and regulating device according to any one of claims 1 to 6, **characterized in that** the pressure unit comprises, as a lower housing part, an end-side cartridge housing (6) with a gas cartridge (7) arranged therein, preferably a CO2 cartridge, to which a sealing housing (15) is connected as a second housing part, in which the tapping unit is largely arranged in its transport and storage position and closes the sealing housing (15) at the free end, wherein a middle housing part or a transition region in the two housing parts with the regulating unit can be formed between the two housing parts.

8. Tapping and regulating device according to claim 7, **characterized in that** outside the cartridge housing (6) a riser pipe (27) is formed for the pressure-induced rise of the liquid, which opens into the sealing housing (15) in its region and opens into an internal flow channel (26) inside the sealing housing (15), which is connected to a tapping channel of the tapping unit via an elastic flow connection, wherein the flow connection is designed as an elastic hose (30) which is just long enough to allow the tapping unit to be moved into its position of use.

9. Tapping and regulating device according to one of claims 1 to 8, **characterized in that** the pressure unit comprises a pressure sleeve (9) with a screw-in sleeve (8) with a valve tappet (10), which can be actuated via the regulating unit connected to it, wherein the pressure cartridge (7) is screwed into the screw-in sleeve (8) and can be actuated via the valve tappet (10), wherein the regulating unit comprises a diaphragm (12) acting on the valve tappet (10), which is exposed to the pressure of a pressure chamber formed between the pressure sleeve (9) and the diaphragm (12) and opens or closes the pressure cartridge (7) via the valve tappet (10) against the pressure of a spring loaded tensioner.

10. Tapping and regulating device according to one of claims 1 to 9, **characterized in that** the tapping unit comprises a tapping head (32) with a tapping channel connected to the elastic hose (30) and a tapping lever (35) for actuation, wherein the tapping unit can comprise a valve roller (34) which successively opens or closes the tapping channel when the tapping lever (35) is actuated.

11. Tapping and regulating device according to claim 10, **characterized in that** the tapping unit comprises a handling device at its front end for pulling the tapping unit out of the transport position into the operating position.

12. Tapping and regulating device according to claim **11, characterized in that**, in the transport position, a tamper-evident seal (38) detachably connects the tapping head (32) to the sealing housing (15) and, if necessary, closes the free end of the tapping channel, which irreversibly detaches or breaks away from the sealing housing (15) when the tapping unit is pulled out by means of the handling device and, if necessary, opens the tapping channel to the free outlet (41).

13. Tapping and regulating device according to one of claims 10 to 12, **characterized in that** a clamping device (40) is provided in the tapping head (32), which serves to clamp the tapping head (32) onto the rim or fold (4) of the container (1).

14. Tapping and regulating device according to claim 7 or any one of claims 8 to 13, if backreferencing claim 7, **characterized in that** the sealing housing (15) has a flange or a circumferential shoulder at its free end for external contact with the edge of the opening (3) in the lid (2) of the container (1), wherein the sealing housing (15) has a locking device with sealing means below or behind the flange or shoulder for sealing against the opening (3) in the lid (2) of the container (1).

15. Container (1), in particular a beverage container, preferably a beer keg for beer or for a beer beverage, for example a 5 liter party beer keg, with a tapping and regulating device for dispensing a liquid according to any one of claims 1 to 14.

## Revendications

1. Dispositif de prélèvement et de régulation destiné à la distribution d'un liquide hors d'un récipient (1), en particulier hors d'un récipient à boisson, de préférence à la distribution d'une bière ou d'une boisson à la bière hors d'un fût de bière, de préférence d'un fût de bière de 5 L « party », avec un agencement en forme de tige ou de cylindre composé d'une unité de pression, d'une unité de régulation et d'une unité de distribution, qui peut être introduite de préférence quasiment à fleur dans le récipient (1) par une ouverture (3) ménagée dans le couvercle (2) du récipient (1), l'unité de prélèvement pouvant être amenée d'une position de transport et de stockage enfichée dans l'agencement à une position d'utilisation hors de l'agencement et en communication fluidique avec celle-ci, et l'unité de prélèvement extraite pouvant être installée sur le récipient (1), de préférence sur son bord, pli (4) ou similaire, aux fins de manipulation ou d'actionnement, **caractérisé en ce que**, entre l'unité de régulation et l'unité de prélèvement, un dispositif de sécurité contre la surpression (18) est prévu.

2. Dispositif de prélèvement et de régulation selon la revendication 1, **caractérisé en ce que** le dispositif de sécurité contre la surpression (18) comprend un disque de rupture (21) soumis à une force élastique ainsi qu'un anneau d'étanchéité.

3. Dispositif de prélèvement et de régulation selon la revendication 1 ou 2, **caractérisé en ce que** le dispositif de sécurité contre la surpression (18) comprend une étoile de centrage et de positionnement (47) sur la face intérieure de laquelle se trouve le ressort (46) et sur la face extérieure de laquelle se trouve un disque de scellement (19), éventuellement avec un joint d'étanchéité (36) disposé entre les deux, le fluide pouvant pénétrer à l'intérieur du dispositif de sécurité contre la surpression (18) autour d'une étoile de centrage et de positionnement (47) du disque de rupture (21) lorsque le disque de rupture (21) se soulève du joint d'étanchéité (36).

4. Dispositif de prélèvement et de régulation selon la revendication 2 ou 3, dans la mesure où celle-ci se réfère à la revendication 2, **caractérisé en ce que** le disque de rupture (21) est conçu et disposé de telle sorte qu'il se soulève du joint d'étanchéité (36) en cas de dépassement d'une pression prédéfinie à l'intérieur du récipient (1) et permet ainsi un écoulement autour d'une étoile de centrage et de positionnement (47) du disque de rupture (21) via des canaux d'admission (53) et donc une évacuation de la pression.

5. Dispositif de prélèvement et de régulation selon la revendication 2 ou selon la revendication 3 ou 4, dans la mesure où celles-ci se réfèrent à la revendication 2, **caractérisé en ce qu'**un orifice de mise à l'atmosphère (49) est prévu, par lequel, en cas de dépassement de pression, le fluide peut s'écouler ou s'échapper à l'extérieur autour du disque de rupture (21).

6. Dispositif de prélèvement et de régulation selon la revendication 2 ou selon les revendications 3 à 5, dans la mesure où celles-ci se réfèrent à la revendication 2, **caractérisé en ce que** des rainures de purge rapide (52) sont prévues, à travers lesquelles, lorsque le disque de rupture (21) vient en appui contre une butée de course, le fluide peut s'échapper par l'orifice de mise à l'atmosphère (49) malgré l'application du disque de rupture (21).

7. Dispositif de prélèvement et de régulation selon l'une des revendications 1 à 6, **caractérisé en ce que** l'unité de pression comprend, en tant que partie inférieure du boîtier, un boîtier de cartouche (6) à extrémité, dans lequel est disposée une cartouche de gaz (7), de préférence une cartouche de CO2, à laquelle se raccorde, en tant que deuxième partie du boîtier, un boîtier étanche (15) dans lequel l'unité de prélèvement est disposée dans sa position de transport et de stockage et qui se termine à son extrémité libre, une partie centrale du boîtier ou une zone de transition pouvant être formée entre les deux parties du boîtier avec l'unité de régulation.

8. Dispositif de prélèvement et de régulation selon la revendication 7, **caractérisé en ce qu'**à l'extérieur du boîtier de cartouche (6) est formé un tube ascendant (27) pour la montée du liquide sous l'effet de la pression, qui débouche dans le boîtier d'étanchéité (15) dans la zone de celui-ci et débouche à l'intérieur du boîtier d'étanchéité (15) dans un canal interne (26), lequel canal est relié à un canal de distribution de l'unité de distribution par une liaison d'écoulement élastique, la liaison d'écoulement étant réalisée sous la forme d'un tuyau élastique (30) dont la longueur est juste suffisante pour permettre de mettre l'unité de distribution dans sa position d'utilisation.

9. Dispositif de prélèvement et de régulation selon l'une des revendications 1 à 8, **caractérisé en ce que** l'unité de pression comprend un manchon de pression (9) avec un manchon à visser (8) avec poussoir de soupape (10), qui peut être actionné par l'unité de régulation reliée de manière fonctionnelle, la cartouche de pression (7) étant vissée dans la douille à visser (8) et pouvant être actionnée par le poussoir de soupape (10),
l'unité de régulation pouvant comprendre une membrane (12) agissant sur le poussoir de soupape (10), qui est soumise à la pression d'une chambre de pression formée entre le manchon de pression (9) et la membrane (12) et qui, contre la pression d'un tendeur de pression soumis à la force élastique, ouvre ou ferme la cartouche de pression (7) par l'intermédiaire du poussoir de soupape (10).

10. Dispositif de prélèvement et de régulation selon l'une des revendications 1 à 9, **caractérisé en ce que** l'unité de prélèvement comprend une tête de prélèvement (32) avec un canal de prélèvement se raccordant au tuyau élastique (30) et un levier de distribution (35) servant à l'actionner,
l'unité de prélèvement pouvant comprendre un rouleau de soupape (34) qui ouvre ou ferme successivement le canal de distribution lors de l'actionnement du levier de distribution (35).

11. Dispositif de prélèvement et de régulation selon la revendication 10, **caractérisé en ce que** l'unité de prélèvement comprend, à son extrémité frontale, un organe de manipulation permettant de retirer l'unité de prélèvement de la position de transport pour la mettre en position d'actionnement.

12. Dispositif de prélèvement et de régulation selon la revendication 11, **caractérisé en ce que**, dans la position de transport, un scellé d'inviolabilité (38) relie de manière amovible la tête de prélèvement (32) au boîtier d'étanchéité (15) et, le cas échéant, ferme l'extrémité libre du canal de prélèvement, qui se détache ou se brise de manière irréversible du boîtier d'étanchéité (15) lors du retrait de l'unité de prélèvement à l'aide d'un organe de manipulation et libère le cas échéant le canal de prélèvement pour permettre l'écoulement libre (41).

13. Dispositif de prélèvement et de régulation selon l'une des revendications 10 à 12, **caractérisé en ce qu'**un dispositif de serrage (40) est prévu dans la tête de prélèvement (32), qui sert à fixer par serrage la tête de prélèvement (32) sur le bord ou pli (4) du récipient (1).

14. Dispositif de prélèvement et de régulation selon la revendication 7 ou l'une des revendications 8 à 13, dans la mesure où celles-ci se réfèrent à la revendication 7, **caractérisé en ce que** le boîtier d'étanchéité (15) présente à son extrémité libre une bride ou un épaulement périphérique destiné à venir en appui extérieur contre le bord de l'ouverture (3) dans le couvercle (2) du récipient (1),
le boîtier d'étanchéité (15) pouvant présenter, sous ou derrière la bride ou l'épaulement, un dispositif d'encliquetage avec des moyens d'étanchéité pour assurer l'étanchéité par rapport à l'ouverture (3) dans le couvercle (2) du récipient (1).

15. Récipient (1), en particulier un récipient à boisson, de préférence un fût de bière pour bière ou boisson à base de bière, par exemple un fût de bière de 5 L « party », comportant un dispositif de prélèvement et de régulation destiné à la distribution d'un liquide selon l'une des revendications 1 à 14.
